# EUROPEAN PATENT SPECIFICATION

(11) **EP 2 442 633 B1**
(45) Date of publication and mention of the grant of the patent: **31.07.2013**
(21) Application number: 10725251.2
(22) Date of filing: 11.06.2010
(51) Int. Cl.: A01G 17/04, F16G 11/12

(54) **A TREE ANCHORING KIT AND A STRAP TENSIONER FOR USE THEREWITH**
BAUMVERANKERUNGSSET UND RIEMENSTRAFFER DAFÜR
KIT D'ANCRAGE D'ARBRE ET TENDEUR DE SANGLES À UTILISER AVEC CELUI-CI

(30) Priority: 19.06.2009 GB 0910664; 04.02.2010 GB 201001856; 15.02.2010 GB 201002568
(43) Date of publication of application: 25.04.2012
(73) Proprietor: Platipus Anchors Holdings Ltd., Redhill, Surrey RH1 4DP (GB)
(72) Inventor: AGG, Charles, Simon, James, Leigh Reigate, Surrey RH2 8PY (GB); RUSSELL, Michael, Hamilton, Burgess Hill RH15 9XS (GB)
(74) Representative: Pluckrose, Anthony William
(86) International application number: PCT/GB2010/001150
(87) International publication number: WO 2010/146336

(56) References cited:
- WO-A1-90/09535
- WO-A2-2007/094906
- GB-A- 2 322 782
- US-A- 3 718 315
- US-A- 3 965 539
- US-A- 4 894 950
- US-A- 5 217 208
- US-A1- 2003 192 238

## Description

The present invention relates to tree anchoring kit and to a strap tensioner for use therewith.

Traditionally when mature or semi-mature trees were transplanted they were secured upright in their transplanted locations by posts, stakes or guy wires, all visible above ground and unsightly. As an improvement to this the applicant developed an underground root ball fixing kit which comprises a number, e.g. three, ground anchors, cable (sometimes galvanised), matting and a ratchet tensioner of the type illustrated in GB2258896. A pit is dug for the tree's root ball. Next the ground anchors are driven into the ground below the pit bottom, approximately on a circle (when the pit is viewed in plan from above) surrounding the root ball as close as possible, spaced apart around the perimeter of such a circle, at radii spaced approximately 120° apart (when the pit is viewed in plan from above). Each ground anchor has an anchor cable attached thereto which extends through the earth trailing the anchor as the anchor is driven to a desired depth. Then each ground cable is pulled upwardly to rotate each ground anchor in the ground from an initial installation position in which the anchor's load-reacting surface is roughly vertical to a working position in which the anchor's load-reacting surface is roughly horizontal, a process called "load locking" by the applicant. An anchor so rotated is able to resist tension in the cable acting to pull the anchor up out of the ground. Each cable attached to each anchor has a loop at an end distal from the ground anchor. When the anchors have all been load locked then a metal tensioner cable is passed through the looped ends of the anchor cables. The matting is arranged in a triangular form (when viewed in plan from above) on a top surface of the root ball, with the points of the triangle roughly aligned when the three ground anchors (again when viewed in plan from above). The tensioner cable when inserted through the loops in the ground anchor cables is arranged to extend over the surface of the matting and the two ends of the cable are connected to the ratchet tensioner which is used to tension the tension cable in order to secure the root ball in place with the ground anchors holding the tree upright and in position. The pit is back filled with soil and compost and the tree anchoring kit thus buried underground and out of sight.

The matting currently used comprises a geotextile which is a mixture of plastic mesh and wire netting. It is very effective in spreading load across a top surface of the root ball. However, it is bulky to transport and expensive. Thus the applicant has been looking for a cheaper, less bulky alternative tree anchoring kit for use alongside the existing solution.
US 2003/192238 discloses an apparatus for stabilising a tree.
US 3718315 discloses a strap adjuster device

The present invention provides in a first aspect a tree anchoring kit as claimed in Claim 1, are in a second aspect a method of anchoring a tree using the anchoring kit of claim 1.

In moving away from use of a geotextile matting and a metal tensioner cable to replace both with a fabric strap, the applicant has faced the technical problem of providing sufficient tension in the strap to secure a root ball in place. Traditional small sized strap tensioners, of a size suitable for an underground anchoring system, used e.g. for strapping secured loads on flatbed lorries, apply loads of only 100 kilograms. Alternative tensioners that apply greater loads are bulky, therefore difficult to bury, and are easily fouled by earth when in use in a dug pit. The applicant has devised a strap tensioner which can apply a load of 700/800 kilograms on a strap, while being compact enough to be easily buried and with a design that prevents fouling of the tension mechanism by earth when used in a pit in the vicinity of a root ball. The new tree anchoring kit comprises three or more ground anchors with associated loop-ended ground anchor cables, as before, but now comprises a strap in place of both the matting and the metal tension cable and comprises the new strap tensioner in place of the cable tensioner.

A preferred embodiment of the present invention is now described with reference to the accompanying Figures in which:
Figure 1 shows a tree anchoring kit according to the present invention in use securing a tree upright;
Figures 2a, 2b and 2c show three stages of installation of the tree anchoring kit;
Figure 3 is a side elevation of a ratchet tension frame of a ratchet tensioner of the kit of Figures 1 to 2c;
Figure 4 is a plan view from above of the ratchet tensioner frame of Figure 3;
Figure 5 is an end elevation of the ratchet tensioner frame of Figures 3 and 4;
Figure 6 is a side elevation view of a ratchet tensioner wheel for use in the ratchet frame of Figures 3 to 5;
Figure 7 is a plan view of the ratchet tensioner wheel of Figure 6, according to a second embodiment of the invention;
Figure 8 is an underneath view of a ratchet tensioner according to a second embodiment of the invention; and
Figure 9 is a side view of the assembled ratchet tensioner, comprising frame and wheel, of the second embodiment of the invention, illustrated in Figure 8.

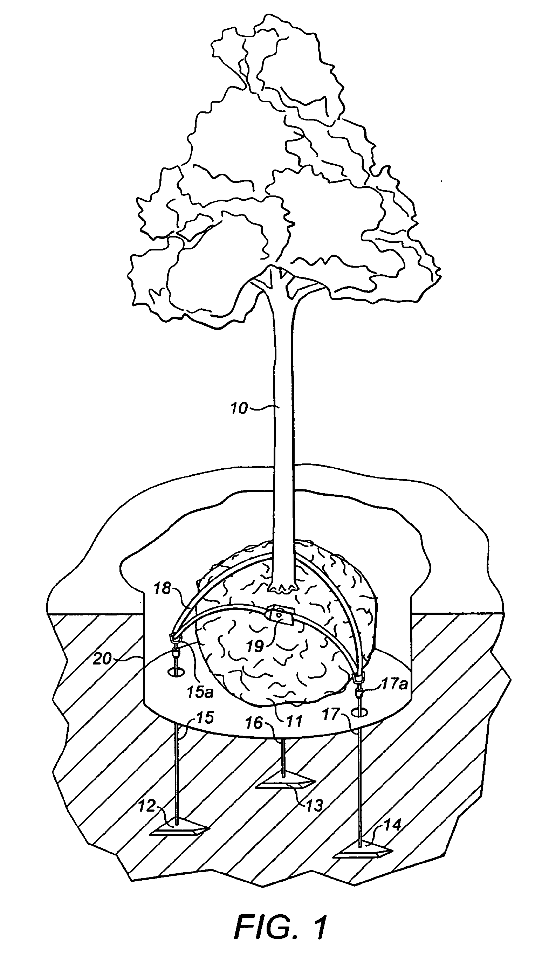

In Figure 1 a tree 10 has a root ball 11 and is secured upright in the ground by a tree anchoring kit according to the present invention. The tree anchoring kit comprises: three ground anchors 12, 13, 14 (of the type described in EP0725863 or EP0725862) each attached to a ground anchor cable 15, 16, 17 which has a looped end, e.g. 15a and 17a, a strap 18 and a strap ratchet tensioner 19. The root ball 11 is located in a pit 20 dug into the ground and is secured in place by the strap 18 engaging the top of the root ball 11. The strap 18 is arranged in a triangular shape (when viewed in plan from above), passing through a metal D-ring 15a secured to a looped end of a ground anchor cable at each corner. The ground anchors lie approximately on the perimeter of a circle having the trunk of tree 10 at its centre, when the arrangement of ground anchors are viewed in plan from above. The radii extending from the circle centre to the ground anchors are equispaced roughly around the circle, i.e. with approximately 120° separating each radius from the other two when viewed in plan from above. As shown in Figure 1 the strap 18 has been tensioned by the tensioner 19 and the tension of the strap 18 and the ground anchor cables 15, 16, and 17 serves to secure the root ball 11 firmly in place. The pit 20 is filled in with soil and compost and the whole tree anchoring kit buried.

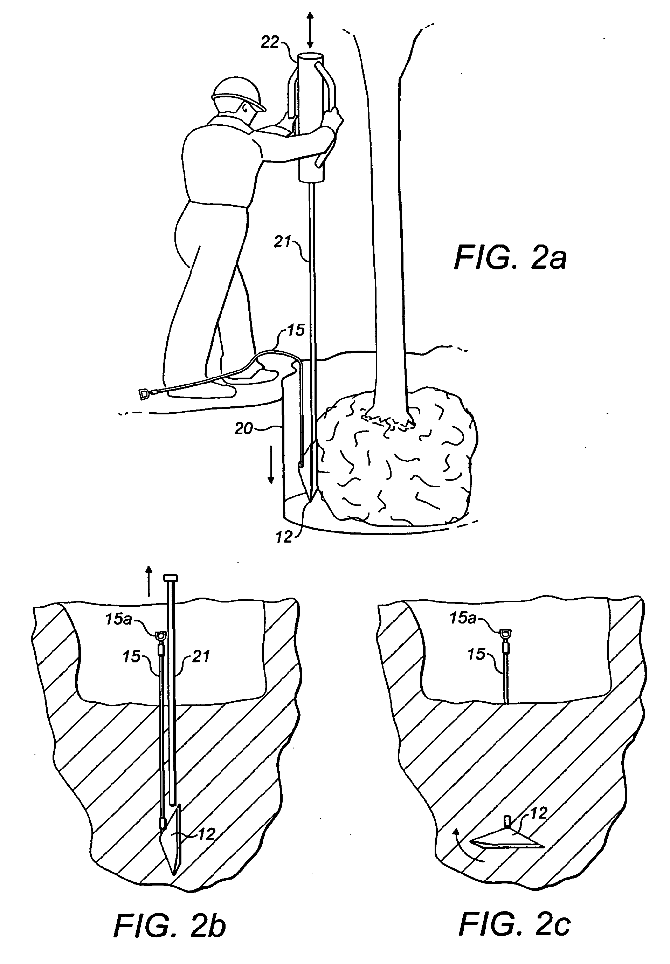

Figures 2a to 2c show the installation of one of the ground anchors, ground anchor 12; the other ground anchors 13, 14 will be installed in exactly the same way. Initially the ground anchor 12 is driven down into the earth below the bottom of pit 20 with a drive rod 21 inserted in a socket in the anchor 12 and using a hammer 22 to impact a distal end of the drive rod, furthest from anchor 12. When the anchor 12 is initially driven into the ground it is angled with its load reacting surface approximately vertically. As the ground anchor 12 is driven downwardly it drags behind it through the ground the ground anchor cable 15; the ground anchor cable 15 is secured to the ground anchor 12. Once the ground anchor 12 has been driven to a desired depth then the drive rod 21 is removed as shown in Figure 2b; the D-ring 15a secured in a looped end of the ground anchor cable 15 remains above ground. Next the ground anchor 12 is rotated in the ground, by applying a tensile force on the ground anchor cable 15; this is shown in Figure 2c. The ground anchor 12 is rotated to a position in which a load reacting surface thereof is normal to the tension force related by the cable 15 - in the illustrated case the load reacting surface is approximately horizontal. This process is called "load locking" by the applicant.

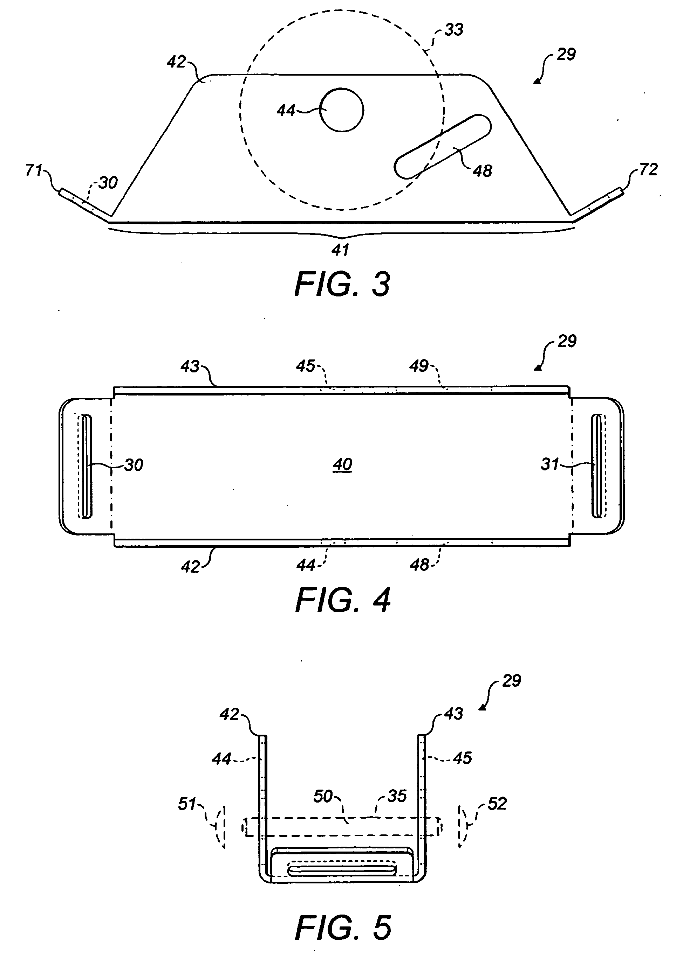

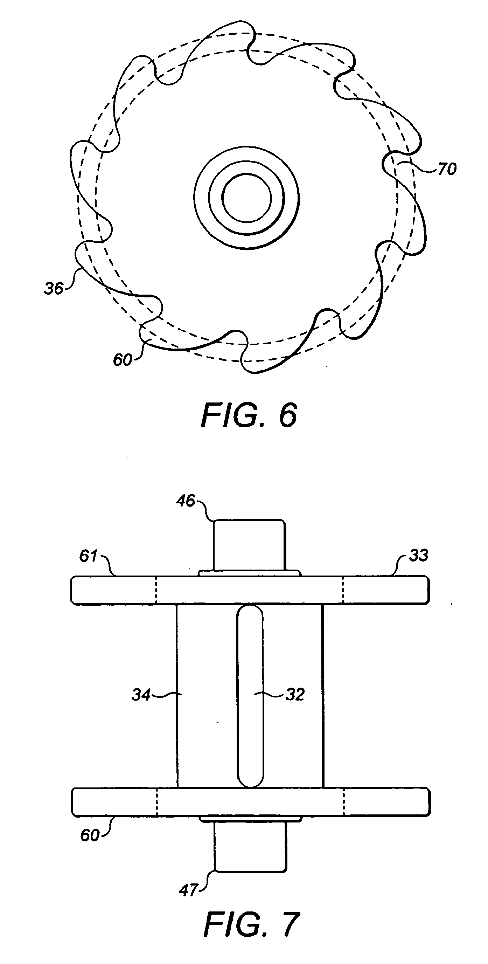

When the three ground anchors 12, 13, 14 have been driven to desired locations and load locked then the strap 18 is fed through the D-rings secured by the looped ends of the ground anchor cables. The two ends of the strap 18 are also fed through slots 30, 31 (see Figures 3 and 4) in a tension frame 29 of the ratchet strap tensioner 19. The two strap ends are also fed through a slot 32 in a tensioning wheel 33 (see Figure 7), the strap ends being fed in opposite directions into the slot 32 with one overlaying the other. (In alternative embodiments, the tensioning wheel 33 may have two slots, and each strap end may be fed into one slot.)

Once pulled through the slot 32 the strap ends are trimmed to a desired length, using scissors, leaving a desired length of each strap free end protruding from the slot 32, each trimmed free end being wrapped around a cylindrical surface 34 of the tensioning wheel 33 so that as the tensioning wheel 33 is turned in frame 29 edges of the slot 32 catch the strap and hold it in position in the slot 32. The tensioning wheel 33 is rotated in frame 29 to tension the strap. A locking pin 35 engages teeth 36 of the tensioning wheel, as will be described later, to lock the wheel in place and prevent it from rotating once sufficient tension has been applied to the strap.

The frame 29 of the tensioner 19 is shown in detail in Figures 3, 4 and 5. It is formed out of a pressing from sheet metal, folded into shape. The frame 29 has a flat base section 40 which provides an aperture free lower engagement surface for engaging the earth on the top of the root ball 11. Folded upwardly from the base section 41, approximately at right angles thereto (see Figure 5), are two parallel spaced apart side walls 42, 43 which have a trapezoidal shape when viewed in side elevation (see Figure 3). The side walls 42, 43 are provided with aligned circular apertures 44, 45 through which journals 46, 47 of the ratchet tensioning wheel 33 extend when the ratchet tensioner is fully assembled. In the manufacturing process of the ratchet tensioner the side walls 42 and 43 will be part way folded out of the plane of the base section 40, then the tensioning wheel 33 is inserted between them and finally the walls 42, 43 folded fully into position with the tensioning wheel in place so that the journals 46, 47 extend though the aligned apertures 44, 45 in the side walls 42, 43 and the tension wheel 33 is secured in place between the side walls 42, 43 for rotation about an axis defined by the aligned circular apertures 44, 45.

The side walls 42, 43 are also provided with aligned slots 48, 49 which are inclined at an angle of approximately 30° to the plane of the base 40, having first ends located nearest the tensioning wheel 33 which are closer to the base 40 than second ends further spaced apart from the tensioning wheel 33. A locking pin 50 is inserted through the aligned slots 48, 49 and end caps 51, 52 are secured to the ends of the locking pin 50 to retain the locking pin 50 in the slots. The locking pin 50 will slide under gravity to the ends of the slots 48, 49 nearest the base 40. The tensioning wheel 33 is indicated by a simple circle in Figure 3, but is shown in detail in Figures 6 and 7. The wheel 33 has a pair of externally toothed generally circular sprocket wheels 60, 61, spaced apart by the central cylindrical slotted section 34 mentioned above. The teeth of the sprocket wheels 60, 61 are shaped so that engagement of the teeth with the pin 50 allows rotation of the wheel 33 in one direction of rotation only (anti-clockwise as shown in Figure 6). When the wheel 33 is rotated in this direction then the shaped teeth act to slide the pin 50 back and forth along the slots 48, 49, thereby allowing rotation of the wheel 33. When the wheel 33 tries to rotate in the opposite direction then the locking pin 50 gets ensnared in undercuts, e.g. 70, provided by the teeth of the sprocket wheels 60, 61 and prevents such rotation.

The frame 29 has a pair of tabs 71, 72 at ends of the base 40 which are each inclined at roughly 30° to the base 40 and are provided with the slots 30, 31 through which the strap is fed. A preferred range of inclination would be 30° to 60°.

Whilst the tensioners of the older tree anchor system were located on top of the geotexile matting and so ingress of earth during tensioning was not a problem, the tensioner 29 is located directly on the earth of the root ball 11. Thus the provision of an aperture free base 40 and the inclined tabbed ends 71, 72 is important to prevent ingress of soil.

The feeding of both ends of the strap through the tensioning wheel 33 is important since this means that equal and opposite forces are applied on the strap and this prevents the tensioner "walking", i.e. moving when tension is applied, which can occur when only one end of the strap is attached to the wheel and the other end simply fixed to the frame.

The tensioner of the present invention is capable of applying tension of 700-800 kilograms on the strapping, whereas traditional small scale strap tensioners (e.g. used to secure loads on lorry flatbeds) that are of suitable size to be employed in a tree anchor system are capable of only 100 kilograms tension.

The strap tensioner will have a tensioning wheel 33 with sprocket wheels 60, 61 typically spaced apart by 25-50mm to accommodate straps of the same range of widths - with strap widths of 25mm, 35mm and 50mm being commonly used. The tensioner frame will be suitably sized to accommodate this. The frame is wider (transverse to belt direction) than the tensioner of GB2258896 and its side walls are less tall, therefore it is more resistant to toppling over on tensioning.

If desired, the earth anchor cables 15, 16, 17 can be made of galvanised wire of a corrodible metal chosen to allow corrosion at a selected rate. Thus, after several years, the ground anchor cables will fail and release tension in the anchoring system, to allow the root ball 11 to expand unhindered. Additionally or alternatively, the D-rings or the locking pin 50 could be made of a degradable material such as corrodible mild steel, which would fail after a period in the ground to release tension in the anchoring system and expansion of the root ball 11.

The system will typically comprise a strap of polyethylene or polyester. However, the strap could be made of a degradable material (e.g. biodegradable) which could degrade over 5 years in the ground, again to provide for release of tension and expansion of the root ball 11.

The strap ends can be cut to a chosen length by an installer using scissors, which is far more convenient than when a metal tension cable is used, which needs specialist tools. Also whereas the metal tension cable tends to retain its shape after tensioning, this is not the case with a strap. Thus the task of resetting/re-tensioning becomes a lot easier. Previously installers on unearthing a tensioner found that the tension cable had "bird's nested" and was very difficult to unravel; this problem is solved by the current apparatus.

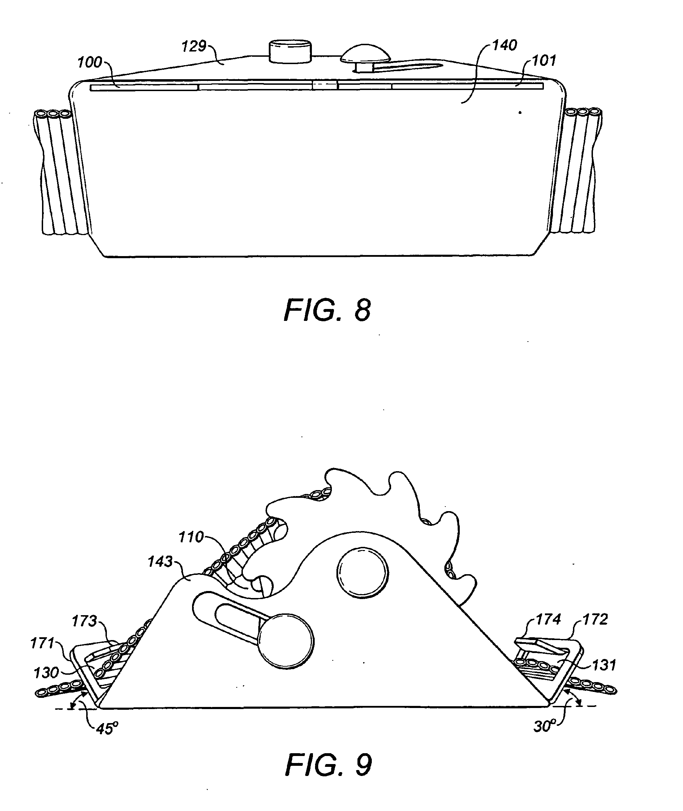

A second embodiment of the present invention is illustrated in Figures 8 and 9. In many respects it is identical to the ratchet tensioner previously described. Therefore only the differences will be described. The side walls, e.g. 143, are shaped in profile when viewed in side elevation, reducing the metal used and the weight of the apparatus. This also provides a recess 110 formed in upper wall edges in which a bar can be located which engages teeth of the tensioning wheel to lock the wheel and prevent it rotating if desired. The inclined tabbed ends 171, 172, are inclined to the base at different angles. The tabbed end 171 is inclined at 45° to best guide the strap up over the top of the tensioning wheel. The tabbed end 172 is inclined at 30° to best guide the strap underneath the tensioning wheel. The slots 103, 131, formed in the tabbed ends 171, 172, are formed by folding metal out of them with the folded metal forming two strap guides 173, 174, and with the upper edge of each slot 130, 131, rounded and smoothed in comparison with the lower edge of each slot 103, 131; the upper edges being formed by the fold lines along which the guides 173, 174 are folded out of the tabbed ends 171, 172. This reduces wear of the webbing and increases its durability.

As can be seen in Figure 8 the blank to form the frame 129 is provided with a pair of slits 100, 101. The pair of slits 100, 101 form a line of weakness which defines a fold line along which the side wall 142 is folded away from the base 140, a so-called "soft bend". In manufacture of the tensioner frame a first side wall is folded away from the base 140 to a point substantially perpendicular to the base; then a journal of the tensioner wheel is located in the circular aperture of the wall. The other wall 129 is initially folded only part way away from base 140, with the folding completed only after the tensioning wheel has been located in place, journalled in the aperture in the first wall. The soft bend provided by slits 100, 101 eases the final folding stage.

## Claims

1. A tree anchoring system kit comprising:
a plurality of ground anchors (12);
for each anchor a ground anchor cable (15);
a strap (18); and
a strap tensioner (19); wherein
in use each ground anchor cable is secured between a respective ground anchor and the strap; and
the strap tensioner comprises: a tensioning wheel (33) rotatably mounted in a tensioner frame (29), the tensioning wheel having a cylindrical portion (34) around which the strap can be wrapped by rotation of the tensioning wheel and securing means (32) for securing both ends of the strap to the tensioning wheel so that tension is applied simultaneously to both strap ends; and
ratchet means (50) for preventing the tensioning wheel from rotating in one direction.

2. A tree anchoring kit as claimed in claim 1 wherein the securing means (32) comprises a slot extending through the cylindrical portion (34) of the tensioning wheel (33), through which both ends of the strap (18) are passed in use.

3. A tree anchoring kit as claimed in claim 1 wherein the securing means (32) comprises a pair of slots, each extending through the cylindrical portion (34) of the tensioning wheel, and in use each end of the strap (18) passes through a respective slot.

4. A tree anchoring kit as claimed in any preceding claim wherein the tensioner frame (29) is formed by folding a section of sheet metal, pre-cut to a desired shape, to form a planar base section (40) and a pair of parallel spaced apart side walls (42, 43) folded away from a plane of the base section.

5. A tree anchoring system kit as claimed in claim 4 wherein:
each side wall (42, 43) is provided with an aperture (44, 45);
the side wall apertures are aligned when the walls are folded away from the base section (40);
the tensioning wheel (33) is provided with journals (46, 47) which extend through the aligned apertures to mount the tensioning wheel in the tensioner frame (29) for rotation about an axis defined by the aligned wall apertures; and
the ratchet tensioner is assembled by folding the side walls part way out of the plane of the base section, locating the tensioning wheel between the side walls and then completely folding of the side walls to locate the journals in the apertures.

6. A tree anchoring kit as claimed in claim 4 or claim 5 wherein the planar base section (40) is non-apertured.

7. A tree anchoring kit as claimed in any one of claims 4 to 6 wherein the pre-cut section of sheet metal has two pair of slits (100, 101) forming a line of weakness along which the first side wall (42) is folded away from the base section (40).

8. A tree anchoring kit as claimed in any one of claims 4 to 7 wherein the tension frame (29) defines a path for the strap (18) and a pair of tabs (171, 172) are folded out of the plane of the base section (40) at ends of the base section spaced apart along the path, the tabs being inclined relative to the plane of the base section and each tab being provided with a guiding slot through which the strap passes.

9. A tree anchoring system kit as claimed in claim 8 wherein each guiding slot (130, 131) is formed by folding a section of metal out of the respective tab (172, 173) with the fold line forming a rounded upper edge of the guiding slot in the tab.

10. A tree anchoring system kit as claimed in any one of the preceding claims wherein the ratchet means (50) comprises a pair of sprocket wheels (60, 61) which form parts of the tensioning wheel (33) sandwiching between them the cylindrical portion (34);
a locking bar (50) is slidable in aligned slots (48, 49) provided in the side walls of the tensioner frame (29); and
the sprocket wheels have teeth shaped such that rotation of the tensioning wheel (33) in a first direction results in an engagement of the locking bar by the teeth which slides the locking bar back and forth in the aligned slots, whilst rotation of the tensioning wheel in the opposite direction ensnares the locking bar in undercuts defined by the teeth and so prevents such rotation.

11. A tree anchoring kit as claimed in claim 10 wherein the locking bar (50) is formed of corrodible material.

12. A tree anchoring kit as claimed in any one of the preceding claims wherein the strap (18) is formed of a biodegradable material.

13. A tree anchoring kit as claimed in any one of the preceding claims wherein the ground anchor cables are formed of corrodible metal.

14. A tree anchoring kit as claimed in any one of the preceding claims wherein each ground anchor cable has a looped end or has D-rings.

15. A method of anchoring a tree using a tree anchoring kit as claimed in claim 1 comprising:
digging a pit for a root ball of the tree;
driving at least three ground anchors into earth below the bottom of the pit to a desired depth, with each ground anchor having a respective ground anchor cable connected thereto and with one end of each cable remaining above the bottom of the pit;
using the ground anchor cables to rotate the earth anchors in the earth each to a position in which a load reacting surface of the earth anchor is at least approximately normal to the ground anchor cable direction;
locating the root ball in the pit at some point after the pit has been dug and before the following steps;
arranging the strap on a top surface of the root ball surrounding a trunk of a tree and feeding the strap through the looped end of each ground anchor cable;
positioning the ratchet tensioner on top of the rootball;
securing both ends of the strap to the tensioning wheel; and
rotating the tension wheel to tension the strap and thereby the ground anchor cables.

## Patentansprüche

1. Baumverankerungssystemset, das folgendes aufweist:
eine Vielzahl von Erdankern (12);
für jeden Anker ein Erdankerkabel (15);
einen Riemen (18); und
einen Riemenspanner (19); wobei
im Einsatz jedes Erdankerkabel zwischen einem entsprechenden Erdanker und dem Riemen befestigt ist; und
der Riemenspanner folgendes aufweist: ein Spannrad (33), das drehbar in einem Spannrahmen (29) befestigt ist, wobei das Spannrad einen zylindrischen Abschnitt (34) aufweist, um welchen der Riemen durch Rotation des Spannrads gewickelt werden kann, und Befestigungsmittel (32) zur Befestigung beider Enden des Riemens an dem Spannrad, so dass gleichzeitig auf beide Riemenenden eine Spannung aufgebracht wird; und
ein Ratschenmittel (50) zum Verhindern, dass sich das Spannrad in eine Richtung dreht.

2. Baumverankerungsset nach Anspruch 1, wobei das Befestigungsmittel (32) einen Schlitz aufweist, der sich durch den zylindrischen Abschnitt (34) des Spannrads (33) erstreckt, welchen beide Enden des Riemens (18) im Einsatz durchtreten.

3. Baumverankerungsset nach Anspruch 1, wobei das Befestigungsmittel (32) ein Paar Schlitze aufweist, von welchen sich jeder durch den zylindrischen Abschnitt (34) des Spannrads erstreckt, und wobei im Einsatz jedes Ende des Riemens (18) einen entsprechenden Schlitz durchtritt.

4. Baumverankerungsset nach einem der vorhergehenden Ansprüche, wobei der Spannrahmen (29) durch Falten eines Bereichs von Blech gebildet wird, das auf eine gewünschte Form vorab zugeschnitten wird, zur Bildung eines ebenen Basisbereichs (40) und eines Paars paralleler voneinander beabstandeter Seitenwände (42, 43), die von einer Ebene des Basisbereichs weggefaltet sind.

5. Baumverankerungssystemset nach Anspruch 4, wobei:
jede Seitenwand (42, 43) mit einer Öffnung (44, 45) versehen ist;
die Seitenwandöffnungen gefluchtet sind, wenn die Wände von dem Basisbereich (40) weggefaltet sind;
das Spannrad (33) mit Zapfen (46, 47) versehen ist, die sich durch die gefluchteten Öffnungen zur Befestigung des Spannrads in dem Spannrahmen (29) für Drehung um eine von den gefluchteten Wandöffnungen definierte Achse erstrecken; und
der Ratschenspanner durch Falten der Seitenwände teilweise aus der Ebene des Basisbereichs, durch Positionieren des Spannrads zwischen den Seitenwänden und durch anschließendes vollständiges Falten der Seitenwände zur Positionierung der Zapfen in den Öffnungen montiert wird.

6. Baumverankerungsset nach Anspruch 4 oder Anspruch 5, wobei der ebene Basisbereich (40) keine Öffnung aufweist.

7. Baumverankerungsset nach einem der Ansprüche 4 bis 6, wobei der vorab zugeschnittene Bereich des Blechs zwei Paar Schlitze (100, 101) aufweist, die eine Schwächelinie bilden, entlang welcher die erste Seitenwand (42) von dem Basisbereich (40) weggefaltet wird.

8. Baumverankerungsset nach einem der Ansprüche 4 bis 7, wobei der Spannrahmen (29) einen Weg für den Riemen (18) definiert und ein Paar Laschen (171, 172) aus der Ebene des Basisbereichs (40) an Enden des Basisbereichs, die entlang des Wegs voneinander beabstandet sind, gefaltet sind, wobei die Laschen relativ zu der Ebene des Basisbereichs geneigt sind und jede Lasche mit einem Führungsschlitz versehen ist, welchen der Riemen durchtritt.

9. Baumverankerungssystemset nach Anspruch 8, wobei jeder Führungsschlitz (130; 131) durch Falten eines Bereichs von Metal aus der entsprechenden Lasche (172, 173) gebildet wird, wobei die Faltlinie eine abgerundete obere Kante des Führungsschlitzes in der Lasche bildet.

10. Baumverankerungssystemset nach einem der vorhergehenden Ansprüche, wobei das Ratschenmittel (50) ein Paar Kettenräder (60, 61) aufweist, die Teile des Spannrads (33) bilden und zwischen sich den zylindrischen Abschnitt (34) einklemmen;
ein Riegel (50) in gefluchteten Schlitzen (48, 49) verschiebbar ist, die in den Seitenwänden des Spannrahmens (29) vorgesehen sind; und
die Kettenräder Zähne aufweisen, die so geformt sind, dass eine Drehung des Spannrads (33) in eine erste Richtung einen Eingriff des Riegels durch die Zähne zur Folge hat, der den Riegel in den gefluchteten Schlitzen hin- und herschiebt, während eine Drehung des Spannrads in die entgegengesetzte Richtung den Riegel in Hinterschneidungen einfängt, die durch Zähne definiert sind, und so eine Drehung verhindert.

11. Baumverankerungsset nach Anspruch 10, wobei der Riegel (50) aus korrodierbarem Material gebildet ist.

12. Baumverankerungsset nach einem der vorhergehenden Ansprüche, wobei der Riemen (18) aus einem biologisch abbaubaren Material gebildet ist.

13. Baumverankerungsset nach einem der vorhergehenden Ansprüche, wobei die Erdankerkabel aus korrodierbarem Material gebildet sind.

14. Baumverankerungsset nach einem der vorhergehenden Ansprüche, wobei jedes Erdankerkabel ein geschlungenes Ende oder Zurringe aufweist.

15. Verfahren zur Verankerung eines Baums unter Verwendung eines Baumverankerungssets nach Anspruch 1, welches Verfahren folgendes aufweist:
Graben eines Lochs für einen Wurzelballen des Baums;
Schlagen von mindestens drei Erdankern in die Erde unter der Unterseite des Lochs bis zu einer gewünschten Tiefe, wobei jeder Erdanker ein entsprechendes Erdankerkabel aufweist, das damit verbunden ist, und wobei ein Ende eines jeden Kabels oberhalb der Unterseite des Lochs bleibt;
Verwenden der Erdankerkabel zur Drehung der Erdanker in der Erde je zu einer Position, in der eine Lastreaktionsfläche des Erdankers mindestens ungefähr lotrecht zu der Erdankerkabelrichtung ist;
Lokalisieren des Wurzelballens in dem Loch, zu einem Zeitpunkt, nachdem das Loch gegraben wurde und vor den folgenden Schritten;
Anordnen des Riemens auf einer oberen Fläche des Wurzelballens, die einen Stamm eines Baums umgibt, und Führen des Riemens durch das geschlungene Ende eines jeden Erdankerkabels;
Positionieren des Ratschenspanners auf der Oberseite des Wurzelballens;
Befestigen beider Enden des Riemens an dem Spannrad; und
Drehen des Spannrads zum Spannen des Riemens und dadurch der Erdankerkabel.

## Revendications

1. Kit de système d'ancrage d'arbre comprenant :
une pluralité de pièces d'ancrage dans le sol (12) ;
pour chaque pièce d'ancrage, un câble d'ancrage au sol (15) ;
une sangle (18), et
un tendeur de sangle (19) ; où
en cours d'utilisation, chaque câble d'ancrage au sol est fixé entre un ancrage de sol respectif et la sangle ; et
le tendeur de sangle comprend : une roue de tension (33) installée d'une manière tournante dans un châssis tendeur (29), la roue de tension ayant une portion cylindrique (34) autour de laquelle la sangle peut être enroulée par la rotation de la roue de tension, et un moyen de fixation (32) pour fixer les deux extrémités de la bande à la roue de tension de sorte que la tension est appliquée simultanément aux deux extrémités de la sangle ; et
un moyen formant rochet (50) pour empêcher que la roue de tension tourne dans une direction.

2. Kit d'ancrage d'arbre selon la revendication 1, dans lequel le moyen de fixation (32) comprend une fente s'étendant à travers la portion cylindrique (34) de la roue de tension (33), à travers laquelle on fait passer les deux extrémités de la sangle (18) en cours d'utilisation.

3. Kit d'ancrage d'arbre selon la revendication 1, dans lequel le moyen de fixation (32) comprend une paire de fentes, chacune s'étendant à travers la portion cylindrique (34) de la roue de tension, et en cours d'utilisation, chaque extrémité de la sangle (18) passe à travers une fente respective.

4. Kit d'ancrage d'arbre selon l'une quelconque des revendications précédentes, dans lequel le châssis tendeur (29) est formé en pliant une section d'une tôle, prédécoupée en une forme souhaitée, pour former une section de base plane (40) et une paire de parois latérales espacées parallèles (42, 43) repliées du plan de la section de base.

5. Kit de système d'ancrage d'arbre selon la revendication 4, dans lequel :
chaque paroi latérale (42, 43) présente une ouverture (44, 45) ;
les ouvertures des parois latérales sont alignées lorsque les parois sont repliées de la section de base (40) ;
la roue de tension (33) est munie de tourillons (46, 47) qui s'étendent à travers les ouvertures alignées pour monter la roue de tension dans le châssis tendeur (29) pour la rotation autour d'un axe défini par les ouvertures des parois alignées ; et
le tendeur de rochet est assemblé en repliant les parois latérales selon une certaine étendue du plan de la section de base, en localisant la roue de tension entre les parois latérales et en pliant ensuite complètement les parois latérales pour localiser les tourillons dans les ouvertures.

6. Kit d'ancrage d'arbre selon la revendication 4 ou la revendication 5, dans lequel la section de base plane (40) est sans ouverture.

7. Kit d'ancrage d'arbre selon l'une quelconque des revendications 4 à 6, dans lequel la section prédécoupée en tôle présente deux paires de fentes (100, 101) formant une ligne d'affaiblissement le long de laquelle la première paroi latérale (42) est repliée de la section de base (40).

8. Kit d'ancrage d'arbre selon l'une quelconque des revendications 4 à 7, dans lequel le châssis tendeur (29) définit un chemin pour la sangle (18), et deux pattes (171, 172) sont repliées du plan de la section de base (40) à des extrémités de la section de base espacées le long du chemin, les pattes étant inclinées relativement au plan de la section de base, et chaque patte présente une fente de guidage à travers laquelle la sangle passe.

9. Kit de système d'ancrage d'arbre selon la revendication 8, dans lequel chaque fente de guidage (130, 131) est formée en pliant une section du métal de la patte respective (172, 173), la ligne de pliage formant un bord supérieur arrondi de la fente de guidage dans la patte.

10. Kit de système d'ancrage d'arbre selon l'une quelconque des revendications précédentes, dans lequel le moyen formant rochet (50) comprend une paire de roues à chaîne (60, 61) qui font partie de la roue de tension (33) en prenant en sandwich entre elles la portion cylindrique (34) ;
une barre de verrouillage (50) est apte à coulisser dans des fentes alignées (48, 49) ménagées dans les parois latérales du châssis tendeur (29) ; et
les roues à chaîne ont des dents configurées de telle sorte que la rotation de la roue de tension (33) dans une première direction se traduit par la mise en prise de la barre de verrouillage avec les dents qui fait coulisser la barre de verrouillage vers l'avant et vers l'arrière dans les fentes alignées, pendant que la rotation de la roue de tension dans la direction opposée immobilise la barre de verrouillage dans des dégagements définis par les dents et empêche ainsi une telle rotation.

11. Kit d'ancrage d'arbre selon la revendication 10, dans lequel la barre de verrouillage (50) est réalisée en matériau ne résistant pas à la corrosion.

12. Kit d'ancrage d'arbre selon l'une quelconque des revendications précédentes, dans lequel la sangle (18) est réalisée en un matériau biodégradable.

13. Kit d'ancrage d'arbre selon l'une quelconque des revendications précédentes, dans lequel les câbles d'ancrage au sol sont formés en métal ne résistant pas à la corrosion

14. Kit d'ancrage d'arbre selon l'une quelconque des revendications précédentes, dans lequel chaque câble d'ancrage au sol présente une extrémité en boucle ou des anneaux en D.

15. Procédé d'ancrage d'un arbre en utilisant un kit d'ancrage d'arbre tel que revendiqué dans la revendication 1, comprenant :
creuser un trou pour une motte de l'arbre ;
entraîner au moins trois ancrages au sol dans la terre en dessous du fond du trou à la profondeur voulue, chaque ancrage au sol ayant un câble d'ancrage au sol respectif connecté à celui-ci, et une extrémité de chaque câble restant au-dessus du fond du trou ;
utiliser les câbles d'ancrage au sol pour faire tourner les ancrage de terre dans la terre, chacun à une position dans laquelle une surface de réaction à la charge de l'ancrage de terre est au moins approximativement normale à la direction du câble d'ancrage dans le sol ;
placer la motte dans le trou à un certain point après que le trou a été creusé et avant les étapes suivantes ;
agencer la sangle sur une surface supérieure de la motte entourant le tronc d'un arbre et faire passer la sangle à travers l'extrémité en boucle de chaque câble d'ancrage dans le sol ;
positionner le tendeur formant rochet sur le dessus de la motte ;
fixer les deux extrémités de la sangle à la roue de tension ; et
faire tourner la roue de tension pour tendre la sangle et de ce fait les câbles d'ancrage dans le sol.
